Europäisches Patentamt

European Patent Office

Office européen des brevets

(11) Veröffentlichungsnummer: **0 162 436**

**A2**

(12) **EUROPÄISCHE PATENTANMELDUNG**

(21) Anmeldenummer: **85106170.5**

(22) Anmeldetag: **20.05.85**

(51) Int. Cl.⁴: **E 21 D 11/14**

(30) Priorität: **21.05.84 DE 3418842**
**18.06.84 DE 8418384 U**
**07.09.84 DE 3433001**
**06.02.85 DE 3504004**
**18.04.85 DE 3514089**

(43) Veröffentlichungstag der Anmeldung:
**27.11.85 Patentblatt 85/48**

(84) Benannte Vertragsstaaten:
**AT BE CH DE FR GB IT LI NL**

(71) Anmelder: **Tunnel Ausbau Technik G.m.b.H.**
**H.-Rainer-Strasse 10**
**D-8036 Herrsching(DE)**

(72) Erfinder: **Seiz, Rudolf**
**H.-Rainer-Strasse 10**
**D-8036 Herrsching(DE)**

(72) Erfinder: **Gresek, Anton**
**Untere Bahnhofstrasse 4**
**D-8034 Germering(DE)**

(74) Vertreter: **Kern, Wolfgang Dipl.-Ing. et al,**
**Patentanwälte Tischer, Kern & Brehm**
**Albert-Rosshaupter-Strasse 65**
**D-8000 München 70(DE)**

(54) **Einzelstabverbindung für die Längsgurte von gitterartigen Segmenten für Tunnelausbaurahmen.**

(57) Die Erfindung betrifft eine Einzelstabverbindung für die Längsgurte von gitterartigen Segmenten für Tunnelausbaurahmen, welche einen mit einer Klaue versehenen Kupplungsabchnitt und einen gegabelten Endabschnitt aufweist, zwischen dessen Schenkel das Gurtende einschweißbar ist, wobei die Klaue in ihrer Oberfläche mit Vertiefungen und Vorsprüngen versehen ist, die mit entsprechenden Vorsprüngen und Vertiefungen der Klaue des zu verbindenden Stabs in formschlüssigem Eingriff bringbar sind, und wobei Mittel vorhanden sind, durch die die in Eingriff stehenden Klauen zusammengehalten werden. Die Klauen können dabei auch Hakenform besitzen. Diese Verbindung soll so ausgebildet werden, daß im Hinblick auf die Biegesteifigkeit und Zugfestigkeit eine noch bessere Kopplung der miteinander zu verbindenden Kupplungsabschnitte erreicht wird, bei der die Kraftführung in der Stabebene liegt, so daß bei Zug und Druck keine Zusatzmomente auftreten, wodurch die Fähigkeit zur Lastübertragung zwischen den miteinander zu kuppelnden Längsgurten erhöht wird, ohne daß die Materialabschnitte vergrößert werden müssen.

Fig.1

EP 0 162 436 A2

PATENTANWÄLTE

0132436

Albert-Rosshaupter-Strasse 65 · D 8000 München 70 · Telefon (089) 7605520 · Telex 5214950 isard Telegramme Kernpatent München

TAT-7217 EP
Ke/v

Tunnel Ausbau Technik GmbH
H.-Rainer-Strasse 10
8036 Herrsching

Einzelstabverbindung für die Längsgurte von gitterartigen Segmenten für Tunnelausbaurahmen

Die Erfindung betrifft eine Einzelstabverbindung für die Längsgurte von gitterartigen Segmenten für Tunnelausbaurahmen, welche
einen mit einer Klaue versehenen Kupplungsabschnitt und einen
gegabelten Endabschnitt aufweist, zwischen dessen Schenkel das
Gurtende einschweißbar ist, wobei die Klaue in ihrer Oberfläche mit Vertiefungen und Vorsprüngen versehen ist, die mit
entsprechenden Vorsprüngen und Vertiefungen der Klaue des zu
verbindenden Stabes in formschlüssigen Eingriff bringbar sind,
und wobei die so miteinander verbundenen Kupplungsabschnitte
durch einen gemeinsamen Schraubenbolzen zusammenhaltbar sind,
oder wobei die Klaue in ihrer Oberfläche mit Vertiefungen und
Vorsprüngen versehen ist, die mit entsprechenden Vorsprüngen
und Vertiefungen der Klaue des zu verbindenden Stabes in formschlüssigen Eingriff bringbar sind.

Eine derartige Einzelstabverbindung ist beispielsweise aus
dem DE-GM 82 06 277  bekannt und wird dort in Verbindung mit
einem gitterartigen Ausbaurahmen eingesetzt. Die Klauen dieser
Einzelstabverbindung sind mit krallenartigen Vorsprüngen versehen,die in an die Krallen angepaßte  Kehlen der Gegenklauen eingreifen. Auf diese Weise wird eine formschlüssige Verzahnung der Verbindungsstelle erreicht, die jedoch zu keiner günstigen Verteilung der in der Verbindungsstelle zwischen den Kupplungsabschnitten übertragenen Zug- und Druckkräfte führt. Darüber hinaus besteht bei sehr hohen Zug- und Schubbeanspruchungen die Möglichkeit, daß sich die Krallen verbiegen und der Schraubenbolzen abgeschert wird. Ferner sind durch die relativ hohe Bauweise der Verbindungsstelle und die damit verbundene Abweichung der Kraftübertragungsflächen von der idealen, in Richtung der Gurtenden verlaufenden Mittellinie nicht unerhebliche Biegemomente zu erwarten, die den Einsatz besonderer Stähle erfordern, um die Gefahr von Rißbildungen auf ein vertretbares Maß zu senken.

Bei einer anderen aus dem DE-GM 82 33 216 bekannten Einzelstabverbindung der genannten Art sind die stabförmigen Gurtenden auf den Boden der konvex gekrümmten Oberfläche des schalenförmigen Endabschnitts des Kupplungsabschnitts aufgeschweißt. Hierzu sind in der neutralen Längsebene jedes Gurtendes zwei parallele Schweißnähte gelegt. Die Mulde der schalen- oder muldenförmigen Ausbildung dieses Befestigungsabschnitts ist halbkreisförmig und bezüglich ihrer Größe an den Durchmesser gängiger Längsgurte angepaßt. Ihre Tiefe ist so bemessen, daß die Schweißnähte in der Zug/Schubebene liegen, in der sich auch die Anlageflächen der Kupplungsabschnitte erstrecken.

Auch diese Konstruktion ist insofern aufwendig, als die Kupplungsabschnitte flache, langgestreckte reckteckige Basiskörper bilden, die zapfenartige Vorsprünge und daran angepaßte Ausnehmungen aufweisen, welche in einer polygonalen Konfiguration um eine zentrale Durchbrechung angeordnet sind, wodurch sich ein erheblicher Herstellungs- und Montageaufwand ergibt, da die zapfenartigen Vorsprünge genau in die zugehörigen Ausnehmungen des Kupplungsgegenstücks passen müssen.

Die Aufgabe der Erfindung besteht also darin, die Einzelstabverbindung der genannten Art so auszubilden, daß
eine wesentlich bessere Verteilung der zwischen den Kupplungsabschnitten zu übertragenden Kräfte bei gleichzeitiger Reduzierung der auftretenden Biegemomente erreicht
wird.

Dabei soll die Befestigung zwischen dem stabförmigen
Gurtende und dem Kupplungsabschnitt insbesondere so erfolgen, daß die Fähigkeit zur Lastübertragung von im
wesentlichen in der neutralen Ebene miteinander zu kuppelnden Längsgurten erhöht wird, ohne die Materialquerschnitte vergrößern zu müssen.

Gemäß einem weiteren Aspekt der Erfindung soll die Einzelstabverbindung so ausgebildet werden, daß die Kraftübertragung zwischen den zu verbindenden Kupplungsabschnitten
in der Stabebene liegt, so daß bei Zug und Druck keine
Zusatzmomente auftreten. Darüber hinaus soll die Verbindung so geartet sein, daß ein möglichst großes Montagespiel erreicht wird, also auf extreme Paßgenauigkeit der
miteinander in Eingriff zu bringenden Kupplungsteile kein
besonderer Wert gelegt werden muß.

In den Fällen, in denen jedoch die Gefahr, daß bei unvorhergesehen hohen Zug- und Schubbeanspruchungen, denen die
Verbindungsstelle unterliegt, der Schraubenbolzen abschert,
gänzlich ausgeschaltet werden soll und auch die notwendigerweise durch das Durchgangsloch des Schraubenbolzens verursachte, an sich unerwünschte Querschnittsschwächung der
Kupplungsabschnitte vermieden werden soll, ist gemäß diesem
Aspekt der Erfindung ein Weg zu finden, die miteinander in
formschlüssigem Eingriff stehenden Klauen sicher zusammenzuhalten bzw. sie miteinander zu verspannen.

Gemäß einem weiteren Aspekt der Erfindung soll für den
Fall, daß die miteinander in formschlüssigem Eingriff stehenden Kupplungsabschnitte ohne Verschraubung zusammengehalten werden, ermöglicht werden, daß die Größe der gegenseitigen Verspannung der Klauen variiert und dadurch den jeweiligen Umständen angepaßt werden kann.

Der erste Teil der genannten Aufgabe wird nun erfindungsgemäß dadurch gelöst, daß die Vertiefungen in der Klaue zwei halbkreisförmig um einen gemeinsamen Mittelpunkt gebogene, in bezug aufeinander höhenversetzte, ebene und über zwei Höhenstufen ineinander übergehende Ringflächen bilden, deren Mittelpunkt dem Mittelpunkt des Durchgangsloches des Schraubenbolzens entspricht.

Durch die halbkreisförmige Ausbildung der Klauen und die höhenversetzte Anordnung der von den Klauen gebildeten Ringflächen wird erreicht, daß die Endabschnitte die Zug- und Druckkräfte bei nahezu symmetrischer Kraftverteilung um den Schraubenbolzen in einer Ebene übertragen, die beinahe in die Mittelachse der stabförmigen Gurtenden fällt, da die ringförmige Kralle des einen Endabschnitts und die mit ihr in Eingriff stehende Vertiefung des anderen Endabschnitts eine vergleichsweise geringe Bauhöhe aufweisen.

Der oben genannte zweite Teil der Erfindungsaufgabe wird dadurch gelöst, daß der schalenförmige Endabschnitt gegabelt ist und zwei parallele Schenkel aufweist, daß das stabförmige Gurtende zwischen diese Schenkel eingeschweißt ist, wobei die Schweißnähte beidseitig des Endabschnitts paarweise gegenüberliegen.

Diese Konstruktion bietet die Möglichkeit der beidseitigen Verschweißung des stabförmigen Gurtendes mit dem Kupplungsabschnitt, so daß zu beiden Seiten des gegabelten Endabschnitts je zwei parallele Schweißnähte sich in Stablängsrichtung erstrecken und dadurch die Biegesteifigkeit und Zugfestigkeit der Verbindungsstelle erhöhen.

Der genannte dritte Teil der Erfindungsaufgabe wird dadurch gelöst, daß der Kupplungsabschnitt des Gegenhakens ein separater, mit dem Endabschnitt unverbundener plattenförmiger Körper ist, und die beiden Schenkel des Endabschnitts an ihrem vorderen Ende ein sie verbindendes Bogenstück bilden, das in den Haken und Gegenhaken einlegbar und durch den Schraubenbolzen festspannbar ist.

Ein wesentlicher Gedanke dieses Teils der Aufgabenlösung ist somit die Ausbildung des einen Kupplungsabschnitts und dessen Haken als separater, vom zugehörigen Endabschnitt des Längsgurtes unabhängiger Bestandteil der Einzelstabverbindung, der erst bei der Herstellung des Kupplungszustandes mit dem anderen Haken des fest mit einem Endabschnitt verbundenen anderen Kupplungsabschnitts in Eingriff gebracht wird und dabei das vordere Ende des zugehörigen Endabschnitts, das zu diesem Zweck als Bogenstück ausgebildet ist, welches zwischen die einander gegenüberliegenden Oberflächen der beiden Haken eingelegt wird, durch den Schraubenbolzen festklemmt, so daß ein kettenschloßähnliches Gebilde entsteht. Dadurch wird eine Kraftübertragung auf Zug, Druck und Biegung in allen Ebenen garantiert. Die Montage erfolgt mit einem relativ großen Spiel, da zunächst das Bogenstück des nicht mit dem Kupplungsabschnitt fest verbundenen Endstücks in den einen Haken eingelegt wird und daraufhin der Gegenhaken als separater Körper auf diesen Haken aufgesetzt wird. Durch Anschrauben der plattenförmigen Gegenklaue mit Hilfe des Schraubenbolzens an dem anderen Haken wird der Endabschnitt mit seinem Bogenstück festgeklemmt und das Spiel zwischen den drei beteiligten Körpern, also Haken, Gegenhaken und Bogenstück, auf nahezu Null reduziert. Nach dem erfolgten Festklemmen verlaufen dann die Kraftlinien in der Startebene, so daß bei Zug- und Druckbeanspruchungen keine Zusatzmomente auftreten.

Die oben genannte vierte Teilaufgabe, die den Fall betrifft, daß auf den Schraubenbolzen und die für diesen erforderlichen Durchgangslöcher ganz verzichtet wird, wird dadurch gelöst, daß die Vorsprünge und Vertiefungen jeder Klaue eine Schrägverzahnung bilden, die in einer Ebene liegt, welche zur Längsachse der Kupplungsabschnitte bzw. Längsgurte geneigt ist, und daß die durch ihre Schrägverzahnungen miteinander in Eingriff stehenden Klauen von einer sie kraftschlüssig umgebenden, rohrförmigen Hülse zusammengehalten werden, deren innerer Querschnitt ursprünglich kleiner ist als der größte gemeinsame Querschnitt der beiden Klauen.

Durch die Querschnittsgrößendifferenz zwischen den in Eingriff stehenden Klauen der Kupplungsabschnitte und der rohrförmigen Hülse und die Schrägverzahnung der Klauen, die von der sie umgebenden rohrförmigen Hülse in Eingriff gehalten werden, wird nicht nur ein dauerhafter Zusammenhalt der Kupplungsabschnitte sichergestellt, da die Hülse, die beim Aufstecken verformt wird, mit letzteren kraftschlüssig verbunden bleibt, sondern es bleibt auch der kraftübertragende Querschnitt der Kupplungsabschnitte ungeschwächt und vergrößert sich noch von Zahn zu Zahn der miteinander in Eingriff stehenden Schrägverzahnungen.

Schließlich wird die oben genannte fünfte Teilaufgabe der Erfindung, die wiederum davon ausgeht, daß die Klauen ohne Schraubenbolzen zusammengehalten werden und durch Schrägverzahnungen miteinander in Eingriff stehen, dadurch gelöst, daß die auf diese Weise miteinander in Eingriff stehenden Klauen auf ihrer äußeren Oberfläche mit einem Gewinde versehen sind, auf das zur gegenseitigen Verspannung der Klauen wenigstens eine Mutter aufschraubbar ist.

Die erfindungsgemäße Konstruktion ist nach diesem Aspekt der Erfindung so ausgebildet, daß die Oberfläche jeder Klaue einen Teil oder eine Hälfte eines Gewindes aufweist, die, sobald die beiden Klauen in Eingriff stehen, zu einem gemeinsamen, einzigen Gewinde vereinigt sind, auf das sich, falls als Gewinde ein konisches Grobgewinde gewählt wird, von beiden Seiten der Kupplungsabschnitte her je eine Mutter aufschrauben läßt, die aufgrund der Konizität des Gewindes die beiden Klauen umso stärker verspannt, je weiter sie auf das Gewinde aufgeschraubt wird.

Vorteilhafte Ausgestaltungen der Erfindung sind in den Unteransprüchen gekennzeichnet.

Die Erfindung wird nachfolgend anhand der in der Zeichnung dargestellten Ausführungsbeispiele näher erläutert. In der Zeichnung zeigen:

Figur 1 eine Längsschnittansicht zweier miteinander durch einen Schraubenbolzen verbundener Kupplungsabschnitte,

Figur 2 eine Draufsicht der Verbindungsstelle von Fig. 1,

Figur 3 eine Draufsicht eines Kupplungsabschnitts mit gegabeltem Endabschnitt ohne einschweißtes Gurtende,

Figur 4 eine Längsschnittansicht des Kupplungsabschnitts von Fig. 3, längs der Linie IV-IV in Fig. 3,

Figur 5 eine Längsschnittansicht der miteinander verbundenen Kupplungsabschnitte zweier Längsgurte mit den aufgeschweißten stabförmigen Gurtenden, gemäß einer anderen Ausführungsform der Erfindung,

Figur 6 eine Längsschnittansicht eines Kupplungsabschnitts der in Fig. 5 gezeigten Art, ohne aufgeschweißtes stabförmiges Gurtende,

Figur 7    eine Draufsicht des Kupplungsabschnitts von
           Fig. 6,

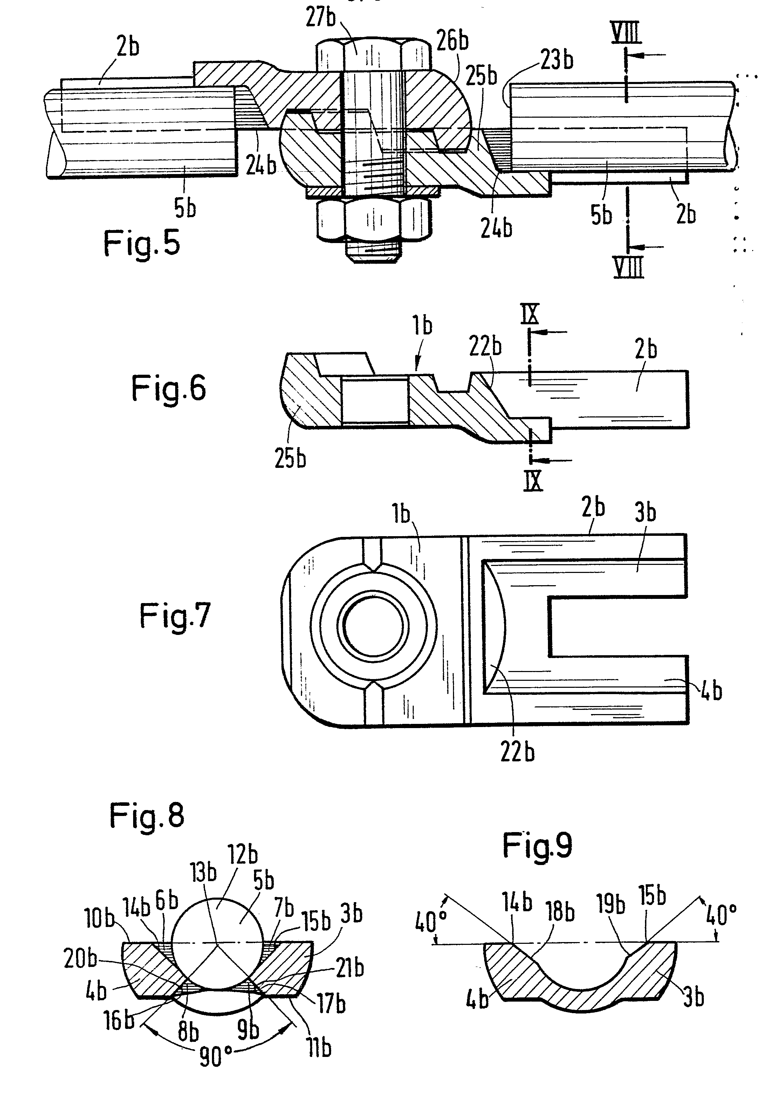

Figur 8    eine Querschnittsansicht der Einzelstabverbindung längs der Linie VIII-VIII in Fig. 5,

Figur 9    eine Querschnittsansicht des Kupplungsabschnitts
           von Fig. 6, längs der Linie IX-IX in Fig. 6,

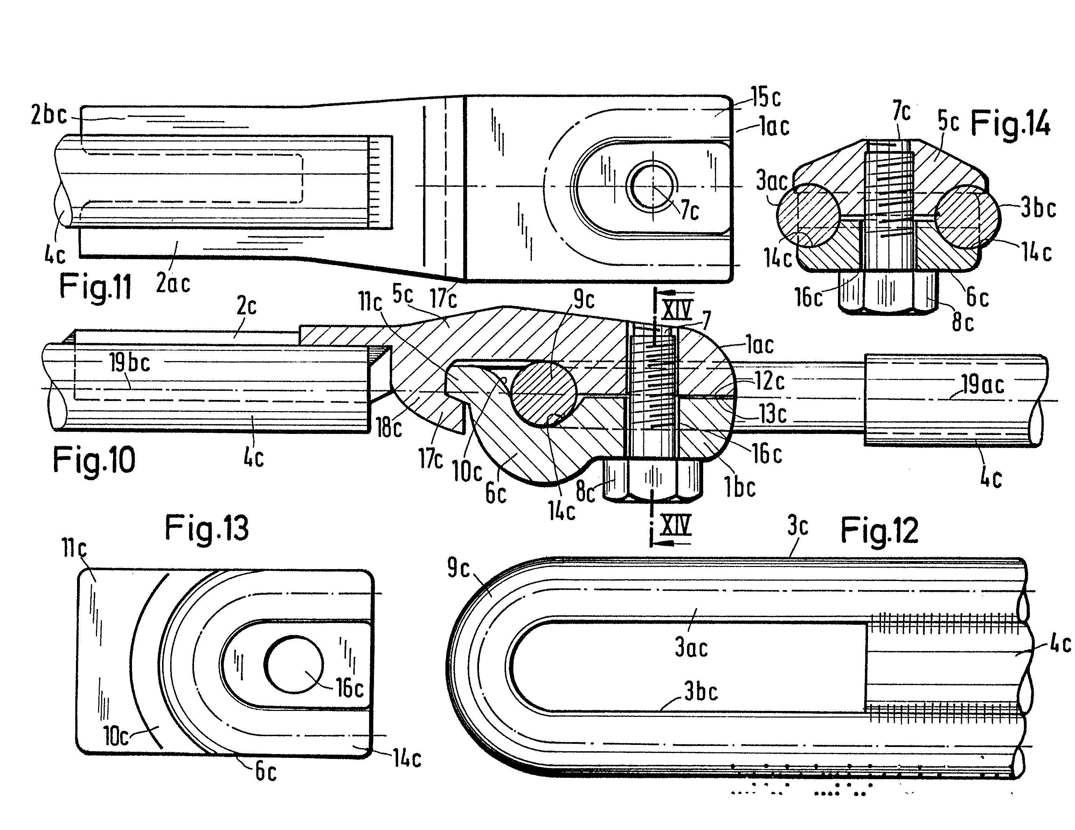

Figur 10   eine Längsschnittansicht einer weiteren anderen
           Ausführungsform der erfindungsgemäßen Einzelstabverbindung im Kupplungszustand,

Figur 11   eine Draufsicht des einen mit dem Endabschnitt
           fest verbundenen Kupplungsabschnitts mit Haken,

Figur 12   eine Draufsicht des anderen Endabschnitts ohne
           Kupplungsabschnitt,

Figur 13   eine Draufsicht des separaten, zum Endabschnitt
           von Fig. 12 gehörenden Kupplungsabschnitts mit
           Gegenhaken,

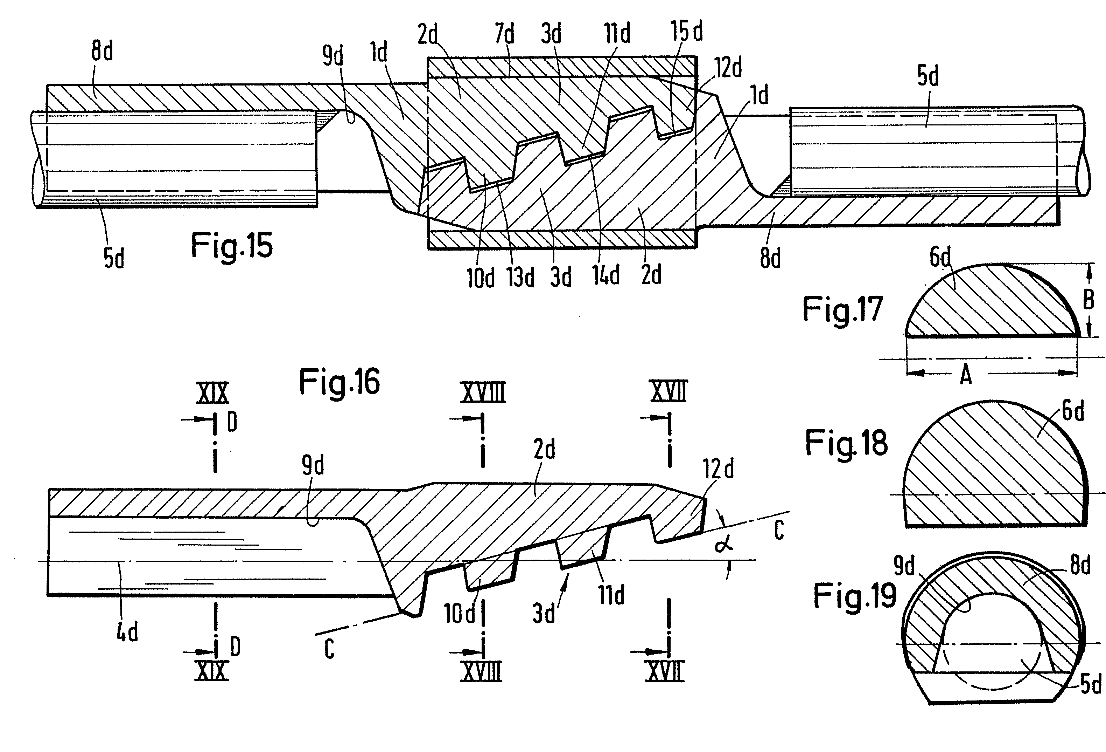

Figur 14   eine Schnittansicht der Einzelstabverbindung
           von Fig. 10, längs der Linie XIV-XIV in Fig. 10,

Figur 15   eine Längsschnittansicht der beiden durch
           Schrägverzahnungen miteinander verbundenen
           Kupplungsabschnitte, gemäß einer weiteren ande-
           ren Ausführungsform der erfindungsgemäßen Einzel-
           stabverbindung, mit angeschweißten Gurtenden,

Figur 16   eine Längsschnittansicht eines einzelnen Kupplungsabschnittes ohne angeschweißtes Gurtende,

Figur 17    eine Querschnittsansicht des Kupplungsabschnitts, längs der Linie XVII-XVII in Fig. 16,

Figur 18    eine Querschnittsansicht eines Kupplungsabschnitts, längs der Linie XVIII-XVIII in Fig. 16,

Figur 19    eine Querschnittsansicht des Kupplungsabschnitts, längs der Linie XIX-XIX in Fig. 16, gesehen in Richtung der Pfeile D, wobei der Umriß des Längsgurtes gestrichelt eingezeichnet ist,

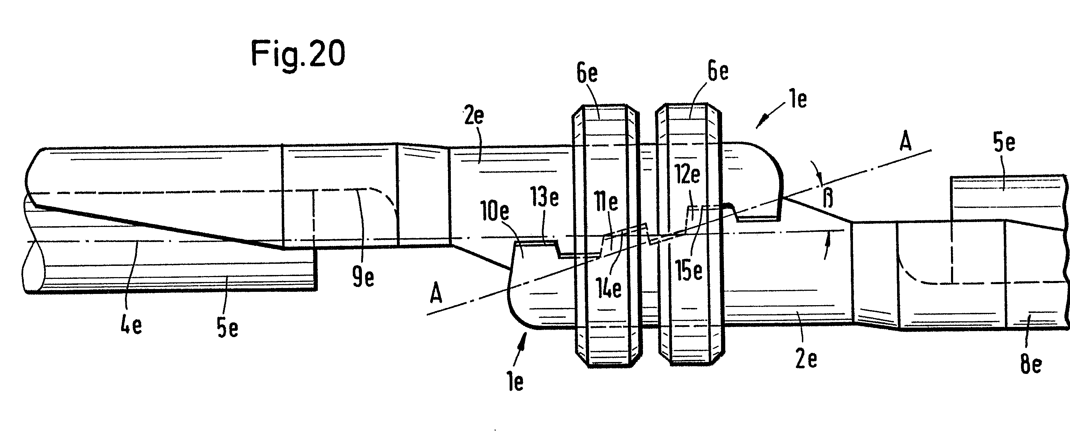

Figur 20    eine Seitenansicht der beiden durch Schrägverzahnung miteinander verbundenen Kupplungsabschnitte, gemäß einer weiteren anderen Ausführungsform der erfindungsgemäßen Einzelstabverbindung, die durch zwei auf ein abgeschnittenes konisches Grobgewinde aufgeschraubte Muttern miteinander verspannt sind,

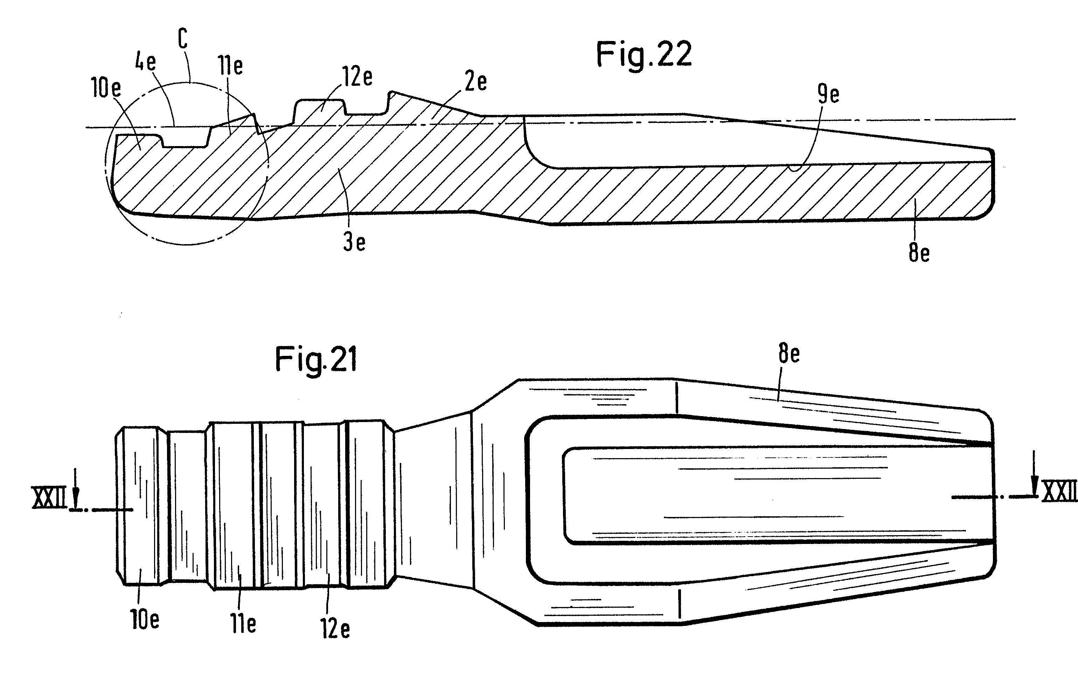

Figur 21    eine Draufsicht des rechten Kupplungsabschnitts ohne angeschweißtes Gurtende,

Figur 22    eine Längsschnittansicht des rechten Kupplungsabschnittes, längs der Linie XXII-XXII in Fig. 21, und

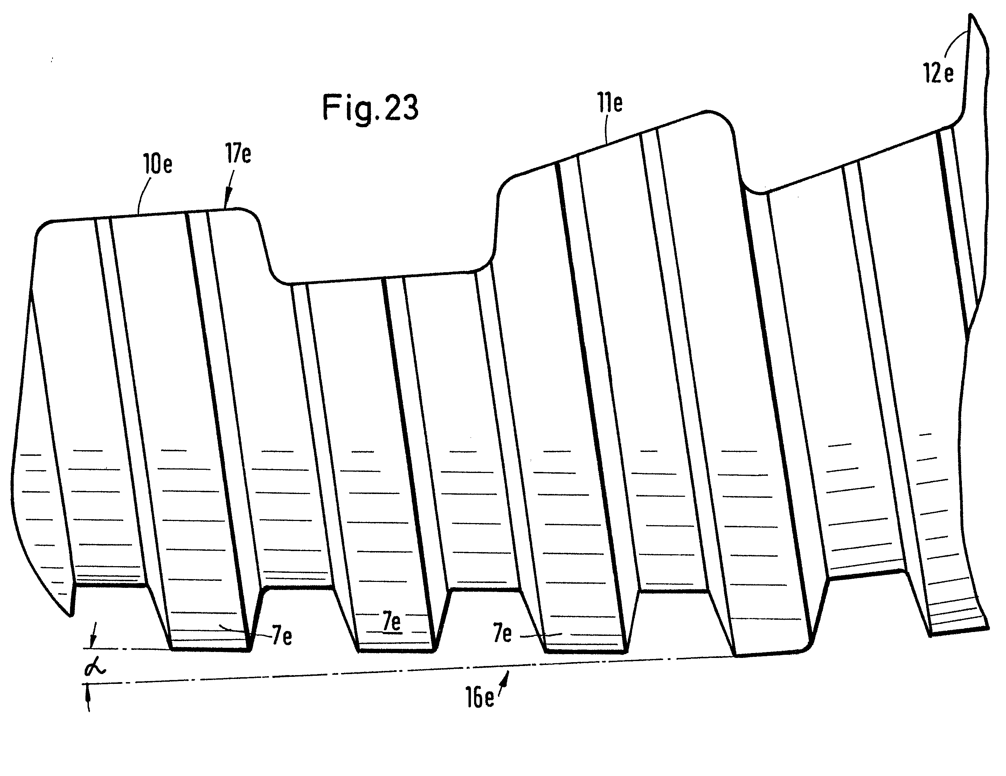

Figur 23    eine vergrößerte Seitenansicht eines Teils des mit dem konischen Grobgewinde versehenen Bereiches des Kupplungsabschnittes von Fig. 21 als Detail C in Fig. 22.

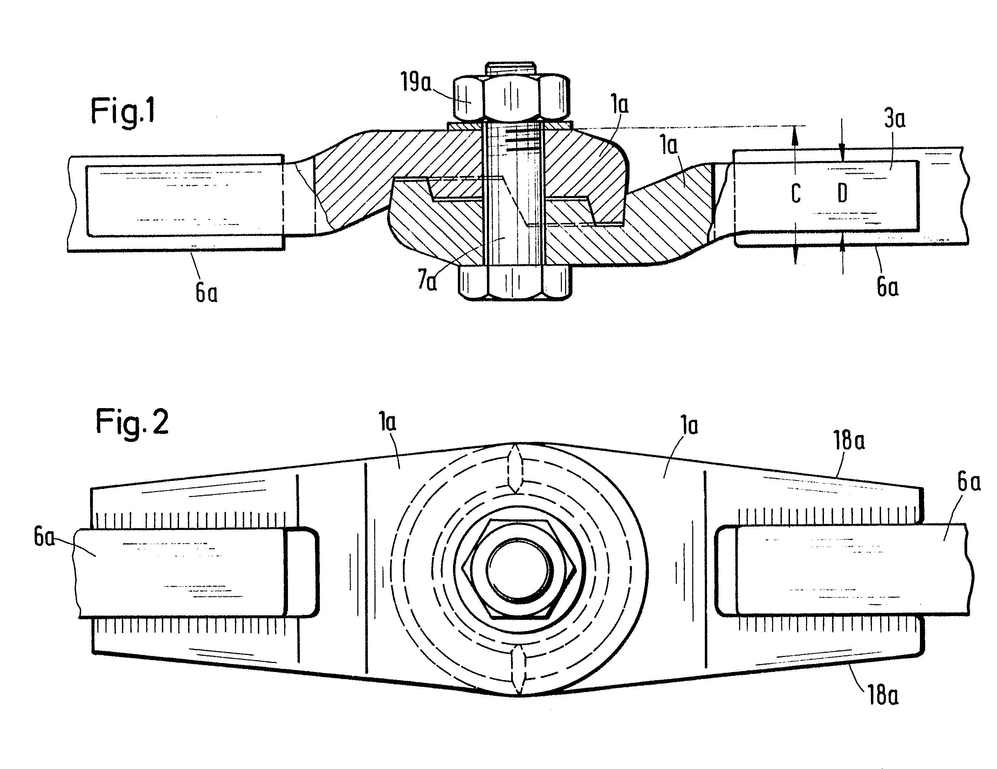

Die in Fig. 1 gezeigte Einzelstabverbindung für die Längsgurte von gitterartigen Segmenten für Tunnelausbaurahmen besteht aus zwei tellerförmigen, übereinander sitzenden Kupplungsabschnitten 1a, die durch einen Schraubenbolzen 7a mit aufgeschraubter Mutter 19a miteinander verspannt sind und die, wie aus Fig. 2 ersichtlich, je einen gegabelten Endabschnitt 3a aufweisen, zwischen dessen beide Schenkel 4a, 5a ein·Gurtende 6a eingeschweißt ist.

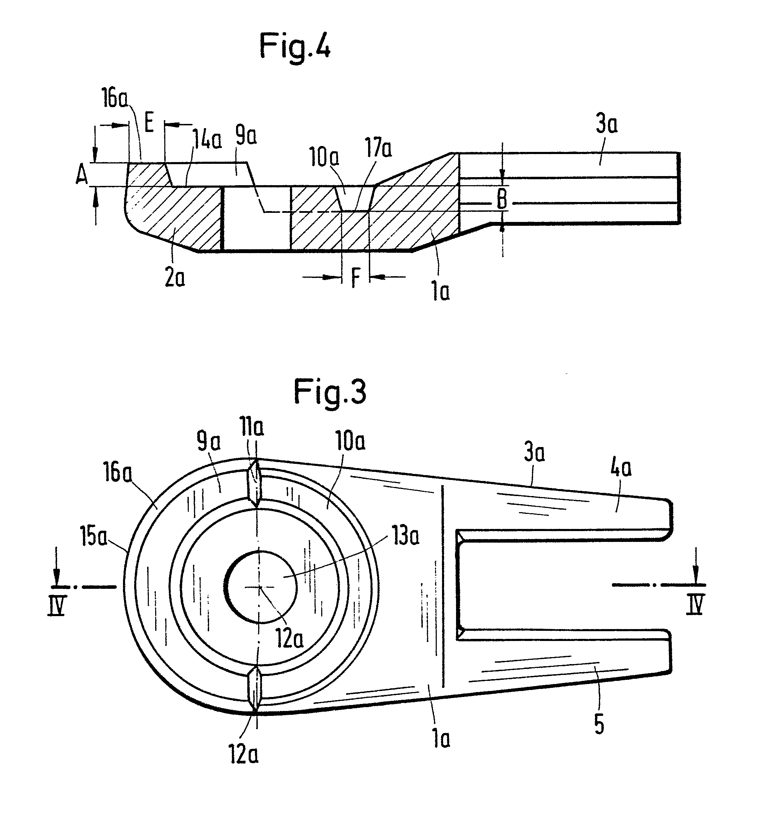

Jeder Kupplungsabschnitt 1a ist mit einer Klaue 2a versehen, die Vertiefungen aufweist, welche zwei halbkreisförmig um einen gemeinsamen Mittelpunkt 8a (Fig. 3) gebogene, in bezug aufeinander höhenversetzte, ebene und über zwei Höhenstufen 11a, 12a ineinander übergehende Ringflächen 9a, 10a bilden, deren Mittelpunkt dem Mittelpunkt des Durchgangsloches 13a des Schraubenbolzens 7a entspricht.

Der Boden 14a der oberen Ringfläche 9a befindet sich, wie aus Fig. 4 ersichtlich, etwa in der Mittelebene des gegabelten Endabschnitts 3a. Die axiale Tiefe A, B der beiden durch die beiden Höhenstufen 11a, 12a voneinander getrennten, halbkreisförmigen Vertiefungen 9a, 10a sind bei diesem Ausführungsbeispiel gleich groß, während die radiale Breite der Vertiefungen unterschiedlich groß ist.

Der Kupplungsabschnitt 1a weist an seinem dem Endabschnitt 3a abgewandten Ende einen halbkreisförmigen Umriß 15a auf, der den Außenrand der die obere Ringfläche 9a begrenzenden äußeren Wandung 16a bildet, deren Dicke E in radialer Richtung gleich der radialen Breite F des Bodens 17a der unteren Ringfläche 10a ist, so daß diese halbkreisförmige Wandung wie eine Klaue in die zur Ringfläche 10a gehörende Vertiefung eingreift, wenn zwei der identisch ausgebildeten Kupplungsabschnitt 1a wie aus Fig. 1 ersichtlich, durch den Schraubenbolzen 7a miteinander verbunden werden.

Die Seitenflächen 18a des gegabelten Endabschnitts 3a erstrecken sich tangential zu dem halbkreisförmigen Umriß 15a des Kupplungsabschnitts 1a, so daß ein optimaler Kraftfluß zwischen dem eingeschweißten Gurtende und dem Kupplungsabschnitt erreicht wird. Dadurch, daß die axiale Höhe C der beiden ineinander greifenden Kupplungsabschnitte 1a kleiner ist als die zweifache Dicke D ihrer Endabschnitte 3a, wird eine relativ geringe Bauhöhe erzielt, die nicht nur die bei der Kraftübertragung im Verbindungsbereich auftretenden Biegemomente auf ein Mindestmaß beschränkt, sonder auch aufgrund ihrer Kompaktheit relativ kleine Spritzschatten bildet. Darüber hinaus ist durch die halbkreisförmige Ausbildung der in der Klaue 2a befindlichen Vertiefungen eine optimale Übertragung der Druck- und Zugkräfte erreicht, an der eine vergleichsweise große Querschnittsfläche der Kupplungsabschnitte teilnimmt, so daß sich eine günstige Spannungsverteilung ergibt.

Die in Fig. 5 im Längsschnitt dargestellte andere Ausführungsform der Einzelstabverbindung für die Längsgurte von gitterartigen Segmenten für Tunnelausbaurahmen weist einen mit einer Klaue versehenen Kupplungsabschnitt 1b und einen gegabelten Endabschnitt 2b auf. Letzterer ist mit dem stabförmigen Gurtende 5b verschweißt und quer zur Stablängsrichtung schalen- oder muldenförmig ausgebildet, wie aus den Fig. 8 und 9 ersichtlich ist. Dieser Kupplungsabschnitt 1b steht durch seine Klaue 25b mit der Klaue 26b eines anderen Kupplungsabschnitts in Eingriff. Beide Klauen werden durch einen Schraubenbolzen 27b in dieser Eingriffsstellung gehalten.

Wie aus den Fig. 6 und 7 ersichtlich ist, ist der schalenförmige Endabschnitt 2b gegabelt, wobei er zwei parallele Schenkel 3b, 4b aufweist. Das stabförmige Gurtende 5b ist zwischen diesen Schenkeln, wie aus Fig. 4 hervorgeht, eingeschweißt. Hierzu sind in Schenkel- bzw. Gurtstablängsrichtung vier parallele Schweißnähte 6b, 7b, 8b und 9b gelegt, die beidseitig des Endabschnitts paarweise gegenüber liegen.

Das Gurtstabende 5b hat einen kreisförmigen Querschnitt, dessen Durchmesser, wie aus Fig. 4 ersichtlich, wenigstens im Bereich der parallel Schenkel 3b, 4b  etwa doppelt so groß ist wie die Dicke der Schenkel, und zwar gemessen als Abstand zwischen deren flacher Oberseite 10b und flacher Unterseite 11b. Der Querschnittsmittelpunkt 13b des Gurtstabendes liegt in derselben Ebene wie die Oberseite 10b der parallelen Schenkel, die wie aus Fig. 5 ersichtlich, der neutralen Längsebene der Gurte entspricht und damit der Ebene der Lastübertragung, so daß Momente in Querrichtung vermieden werden.

Die beiden Schweißnähte 6b, 7b auf dem konkav gewölbten Teil der Oberseite 10b des Endabschnitts 2b entsprechen, wie aus Fig. 8 hervorgeht, hinsichtlich ihrer Dicke und Länge in etwa den beiden Schweißnähten 16b, 17b auf dem konvex gewölbten Teil der Unterseite 11b dieses Endabschnitts. Die inneren Ränder 14b, 15b, 16b, 17b der parallelen Schenkel 3b, 4b sind abgefast, wobei die Abfasungen 18b, 19b auf der Schenkeloberseite mit dem flachen Teil der Oberseite des Endabschnitts einen Winkel von 40° einschließen, während die Abphasungen 20b, 21b auf der Schenkelunterseite mit dem flachen Teil dieser Unterseite einen Winkel von 45° einschließen. Auf diese Weise ist zwischen der Oberfläche 12b des Gurtstabendes 5b und den ihr gegenüberliegenden Oberflächen der parallelen Schenkel 3b, 4b eine biegesteife und zugfeste Schweißverbindung geschaffen, die den auf die Längsgurte der gitterartigen Segmente von Tunnelausbaurahmen einwirkenden, auch in kritischen Fällen zu erwartenden Belastungen standhält.

Darüber hinaus läßt sich die Stirnseite 23b des stabförmigen Gurtendes 5b ebenfalls mit dem Endabschnitt 2b verschweißen, wie aus Fig. 1 ersichtlich. Zur Anbringung der diesbezüglichen Schweißnaht 24b weist die schalenförmige oder muldenförmige, von den beiden parallelen Schenkeln 3b, 4b gebildete Vertiefung des Endabschnittes an ihrem Ende eine abgeschrägte Wand 22b auf.

Die in Fig. 10 im Längsschnitt dargestellte weitere Ausführungsform der Einzelstabverbindung besteht aus einem Kupplungsabschnitt 1ac, der Bestandteil eines Endabschnitts 2c ist, welcher sich an das hintere Ende des Kupplungsabschnitts anschließt und aus zwei parallelen Schenkeln 2ac und 2bc gebildet ist, die zwischen sich das stabförmige Gurtende 4c aufnehmen, das an den Endabschnitt so angeschweißt ist, daß es in der Längsachse des Kupplungsabschnitts 1ac liegt. Letzterer weist einen Haken 5c auf, der mit einem Gegenhaken 6c, wie aus der Zeichnung ersichtlich, in Eingriff bringbar ist und einen separaten, mit dem Endabschnitt 3c (Fig. 12), zu dem er gehört, unverbundenen, plattenförmigen Körper bildet, der mit Hilfe des Schraubenbolzens 8c an den Haken 5c angeschraubt werden kann. Zu diesem Zweck befinden sich in dem Haken 5c und dem Gegenhaken 6c je eine Durchgangsbohrung 7c bzw. 16c, die miteinander in Überdeckung bringbar sind.

Der Endabschnitt 3c weist zwei parallele Schenkel 3ac und 3bc auf, die an ihrem vorderen Ende ein sie verbindendes Bogenstück 9c bilden, das mit den Schenkeln ein einheitliches Ganzes darstellt und zwischen den Haken 5c und Gegenhaken 6c eingelegt werden kann, um zwischen den beiden genannten Haken festgespannt zu werden.

Zu diesem Zweck sind die beiden einander gegenüberliegenden Oberflächen 12c und 13c des Hakens 5c bzw. Gegenhakens 6c im Bereich der Durchgangsbohrungen 7c und 16c des Schraubenbolzens 8c so angeordnet, daß sie in mit einem geringen Abstand parallel verlaufenden Ebenen liegen. In diesen Ebenen bzw. zwischen ihnen erstrecken sich die Längsachsen 19ac und 19bc der aneinandergekoppelten Kupplungsabschnitte 2c und 3c bzw. stabförmigen Gurtenden 4c derart, daß die beiden Längsachsen aufeinander fluchtend ausgerichtet sind und in der Meridianebene des Bogenstücks 9c liegen, wie aus Fig. 10 ersichtlich ist.

Der Haken 5c und der Gegenhaken 6c bilden, wie aus den Fig. 11 und 13, insbesondere jedoch 10, hervorgeht, in den einander gegenüberliegenden Oberflächen 12c und 13c Vertiefungen 14c und 15c zur Aufnahme des Bogenstücks 9c und eines Teils der parallelen Schenkel 3ac und 3bc. Diese Vertiefungen sind ihrer Größe und Form nach an die Konfiguration des Bogenstücks und der parallelen Schenkel angepaßt.

Das stabförmige Gurtende 4c ist auch am Endstück 3c angeschweißt, wie aus Fig. 12 ersichtlich ist, so daß die Einzelstabverbindung, abgesehen von dem Schraubenbolzen 8c, aus drei separaten Teilen besteht, nämlich dem Endstück 3c mit dem Bogenstück 9c, dem Endstück 2 mit dem mit dem Haken 5c versehenen Kupplungsabschnitt 1ac und dem Kupplungsabschnitt 1bc, der den Gegenhaken 6c bildet. Das Ganze ähnelt einem Kettenschloß, das zwecks Verspannung des Endabschnitts 3c und insbesondere seines Bogenstücks 9c im rückwärtigen, dem Kupplungsabschnitt 2c zugewandten Bereich des Hakens 5c eine nutförmige Aussparung 18c mit einem vorspringenden, hakenförmigen Randkörper 17c aufweist, in die ein flanschförmiger Umfangsrandkörper 11c des Gegenhakens 6c so eingreift, daß sich der hakenförmige Randkörper 17c gegen den Umfangsrandkörper 11c legt und beim Anziehen des Schraubenbolzens 8c als Widerlager für das Verspannen des Bogenstücks 9c dient, das in dem in Fig. 10 gezeigten Kupplungszustand der Einzelstabverbindung in einer Ebene senkrecht zur Richtung des Schraubenbolzens 8c liegt. Im übrigen bildet bei dieser Ausführungsform der Kupplungsabschnitt 1bc einen plattenförmigen, rechteckigen Körper, wie aus Fig. 13 ersichtlich, dessen nutförmige Aussparung 10c in Anpassung an den Umfang des Bogenstücks 9c gerundet ist. Die gleiche Rundung findet sich in der nutförmigen Vertiefung 15c des Kupplungsabschnitts 1ac.

Durch diese Konstruktion ist eine Montagemöglichkeit mit großem Spiel gegeben, wobei das Spiel zwischen den oben genannten drei Bestandteilen der Verbindung umso kleiner wird, je stärker der Schraubenbolzen 8c angezogen wird, wobei sich der Abstand zwischen den einander gegenüberliegenden Oberflächen 12c und 13c der Kupplungsabschnitte 1ac und 1bc bis auf Null reduzieren kann. Des weiteren ist durch diese Konstruktion eine Kraftübertragung auf Zug, Druck und Biegung in allen Ebenen garantiert, wobei der Kraftlinienverlauf in der Stabebene sicherstellt, daß bei Zug und Druck keine Zusatzmomente auftreten. Darüber hinaus zeichnet sich diese Konstruktion im Kupplungsbereich durch eine extrem geringe Bauhöhe aus.

Die in Fig. 15 gezeigte Ausführungsform der Einzelstabverbindung besteht aus zwei tellerförmigen, übereinandersitzenden Kupplungsabschnitten 1d, die, wie aus Fig. 19 ersichtlich, schalenförmig gebogene Endabschnitte 8d aufweisen, auf deren Grund 9d die stabförmigen Enden der Längsgurte 5d aufgeschweißt sind. Jeder Kupplungsabschnitt 1d ist mit einer Klaue 2d versehen, die auf ihrer Innenseite eine Schrägverzahnung 3d aufweist, welche in einer Ebene C-C (Fig. 16) liegt, die zur Längsachse 4d der Kupplungsabschnitte 1d bzw. Längsgurte 5d in einem Winkel $\alpha$ geneigt verläuft, der zwischen 1 und 45°, vorzugsweise jedoch 30° beträgt.

Die durch ihre Schrägverzahnung 3d miteinander in Eingriff stehenden Klauen 2d weisen gemeinsam einen elliptischen Querschnitt 6d auf, dessen große in Fig. 17 mit A bezeichnete Achse quer zur Längsachse 4d der Kupplungsabschnitte bzw. Längsgurte liegt. In dem in Fig. 15 gezeigten Eingriffszustand der Einzelstabverbindung werden die

beiden Kupplungsabschnitte 1d durch eine sie kraftschlüssig umgebende Metallhülse 7d zusammengehalten. Diese Hülse weist ursprünglich, d.h. vor ihrem Einbau, einen kreisrunden Querschnitt auf, mit einem Innendurchmesser,der kleiner ist als die große Achse A des elliptischen Querschnitts 6d, jedoch größer als die kleine Achse B dieses Querschnitts. Dies bedeutet, daß die Hülse beim Aufschieben oder Auftreiben auf die miteinander in Eingriff stehenden Schrägverzahnungen der Klauen verformt wird und dadurch ebenfalls einen elliptischen Querschnitt erhält, der in etwa dem Querschnitt 6d entspricht. Diese Verformung schafft die gewünschte kraftschlüssige Verbindung zwischen der inneren Oberfläche der Bohrung und der äußeren Oberfläche der miteinander in Eingriff stehenden Klauen 2d, die ein sichere Verbindung der Klauen und damit Stabilisierung der Einzelstabverbindung bewirkt, so daß die Klauen nicht mehr voneinander gelöst werden können, es sei denn durch eine Rückverformung der Hülse in den Zustand mit kreisrundem Querschnitt. Letzteres ist jedoch unter normalen Einsatzbedingungen der Verbindung nicht zu erwarten.

Anstelle einer rohrförmigen Hülse kreisrunden Querschnitts ließe sich auch eine solche elliptischen Querschnitts verwenden, wobei dann eine der beiden Achsen des elliptischen Hülsenquerschnitts kleiner sein müßte als eine der beiden Achsen A und B des elliptischen Querschnitts 6d, um beim Aufschieben bzw. Auftreiben eine bleibende Verformung der Hülse zu erreichen, gleichzeitig jedoch zu verhindern, daß die Wandung der Hülse überdehnt wird und reißt.

In den Fig. 18 und 19 sind weitere Querschnitte des in Fig. 16 gezeigten Kupplungsabschnittes dargestellt, wobei der Querschnitt von Fig. 18 durch einen Zahn 10d der Schrägverzahnungen 3d verläuft, der sich bereits unterhalb der Ebene befindet, in der die große Achse A der Querschnittsellipse liegt.

Die Schrägverzahnung 3d der Klaue 2d besteht bei dem dargestellten Ausführungsbeispiel aus drei parallelen Zähnen 10d, 11d und 12d, die in entsprechend angepaßten Nuten 13d, 14d und 15d der Gegenklaue eingreifen, geradlinig sind, also in etwa parallele Zahnflanken besitzen, und sich rechtwinklig zur Längsachse 4d der Kupplungsabschnitte 1d erstrecken. Anstelle des dargestellten Zahnprofils ließe sich aber auch ein sägezahnförmiges oder ein anderes geeignetes Profil verwenden. Ebenso könnte anstelle einer geradlinigen Erstreckung der Schrägverzahnung auch eine bogenförmige gewählt werden, obgleich letztere einen höheren Herstellungsaufwand erfordern würde.

Durch Verbindung der rohrförmigen Hülse 7d als Zusammenhalteelement für die beiden Klauen erübrigt sich jegliches Verschrauben, das eine Querschnittsschwächung der Kupplungsabschnitte mit sich bringt. Darüber hinaus hat die Schrägverzahnung den Vorteil, daß sich der tragende Querschnitt des Kupplungsabschnitts von Zahn zu Zahn vergrößert, so daß im Vergleich zu einer geraden bzw. waagrechten Verzahnung der Gesamtdurchmesser der Einzelstabverbindung wesentlich kleiner gehalten werden kann.

Das Achsenverhältnis A : B des elliptischen Querschnitts 6d zweier durch die Schrägverzahnungen 3d, 3d formschlüssig verbundener Klauen 2d, 2d liegt zwischen 1 : 0,99 und 1 : 0,5. Bei dem dargestellten Ausführungsbeispiel ist die große Achse A 34,8 mm lang und die kleine Achse B 32,8 mm, während der Innendurchmesser der unverformten rohrförmigen Hülse 7d 34 mm beträgt.

Die in Fig. 20 gezeigte weitere Ausführungsform der erfindungsgemäßen Einzelstabverbindung für die Längsgurte von gitterartigen Systemen für Tunnelausbaurahmen stellt eine Verbesserung der in den Fig. 15 bis 19 dargestellten Ausführungsform dar, besteht aber ebenfalls aus zwei tellerförmigen, übereinandersitzenden Kupplungsabschnitten 1e, die schalenförmig gebogene Endabschnitte 8e aufweisen, auf deren Grund 9e die stabförmigen Enden der Längsgurte 5e aufgeschweißt sind. Jeder Kupplungsabschnitt 1e ist mit einer Klaue 2e versehen, die auf ihrer Innenseite eine Schrägverzahnung 3e aufweist, welche in einer Ebene A-A liegt, die zur Längsachse 4e der Kupplungsabschnitte 1e bzw. Längsgurte 5e in einem Winkel geneigt verläuft, der zwischen 1 und $45^o$, vorzugsweise jedoch $30^o$ beträgt. Die durch ihre Schrägverzahnung 3e miteinander in Eingriff stehenden Klauen 2e bestehen bei dem dargestellten Ausführungsbeispiel aus je drei parallelen Zähnen 10e, 11e und 12e, die in entsprechend angepaßten Nuten 13e, 14e und 15e eingreifen. Das Profil der Schrägverzahnung 3e, das aus Fig. 22 und Fig. 23, letztere als Detail C von Fig. 22, ersichtlich ist, ist so geartet, daß es die durch die Einzelstäbe über die Längsgurte der gitterartigen Segmente eingeleiteten Kräfte aufnehmen bzw. weiterleiten kann.

Um die beiden durch ihre Schrägverzahnungen 3e miteinander in Eingriff stehenden Klauen gegenseitig zu verspannen, sind die Klauen auf ihrer äußeren Oberfläche 16e mit einem Gewinde 7e versehen, auf das zwei Muttern 6e aufgeschraubt sind. Bei dem Gewinde 7e handelt es sich, wie aus Fig. 23 hervorgeht, um ein leicht konisches Grobgewinde mit einem Konuswinkel $\alpha$ von $4^o$, der jedoch generell zwischen 3 und $10^o$ liegen kann. Die beiden Muttern 6e sind, wie aus Fig. 20 ersichtlich, je einer der Klauen zugeordnet, was bedeutet, daß sie vor dem Ineingriffbringen der Klauen auf den zugehörigen Kupplungsabschnitten 1e sitzen und nach dem Ineingriffbringen von rechts und links auf das konische Grobgewinde 7e aufgeschraubt werden. Durch dieses Aufschrauben werden die Klauen miteinander verspannt, wobei die Spannkraft umso größer wird, je weiter die Muttern auf das Gewinde aufgeschraubt werden.

Bei dem dargestellten Ausführungsbeispiel beträgt der größte Gewindedurchmesser 46 mm und der Zahnflankenwinkel des Gewindes 15°, die Breite des Zahngrundes 3,5 cm und die Breite des Zahnkopfes ebenfalls 3,5 cm. Die Schrägverzahnung, die in Fig. 23 als obere Umrißlinien 17 der unteren Klaue 2e sichtbar ist, ist hier so ausgebildet, daß jeweils ein Zahn 10e, 11e eine Breite aufweist, die etwa der doppelten Breite des Gewindeganges des Gewindes 7e entspricht.

Anstelle des konischen Grobgewindes ließe sich, wie aus der Zeichnung nicht ersichtlich, auch ein anderes Gewinde verwenden, beispielsweise ein gerades Gewinde. In diesem Fall würde zum Verspannen der Klauen 2e eine einzige Mutter entsprechender Breite ausreichen.

Patentansprüche

1. Einzelstabverbindung für die Längsgurte von gitterartigen Segmenten für Tunnelausbaurahmen, welche einen mit einer Klaue versehenen Kupplungsabschnitt und einen gegabelten Endabschnitt aufweist, zwischen dessen Schenkel das Gurtende einschweißbar ist, wobei die Klaue in ihrer Oberfläche mit Vertiefungen und Vorsprüngen versehen ist, die mit entsprechenden Vorsprüngen und Vertiefungen der Klaue des zu verbindenden Stabes in formschlüssigen Eingriff bringbar sind, und wobei die so miteinander verbundenen Kupplungsabschnitte durch einen gemeinsamen Schraubenbolzen zusammenhaltbar sind, dadurch gekennzeichnet , daß die Vertiefungen in der Klaue (2a) zwei halbkreisförmig um einen gemeinsamen Mittelpunkt (8a) gebogene, in bezug aufeinander höhenversetzte, ebene und über zwei Höhenstufen (11a, 12a) ineinander übergehende Ringflächen (9a, 10a) bilden, deren Mittelpunkt dem Mittelpunkt des Durchgangsloches (13a) des Schraubenbolzens (7a) entspricht.

2. Einzelstabverbindung nach Anspruch 1, dadurch gekennzeichnet , daß der Boden (14a) der oberen Ringfläche (9a) etwa in der Mittelebene des gegabelten Endabschnitts (3a) angeordnet ist.

3. Einzelstabverbindung nach Anspruch 1 oder 2, dadurch gekennzeichnet , daß die axiale Tiefe (A, B) der beiden halbkreisförmigen Vertiefungen (9a, 10a) gleich ist.

4. Einzelstabverbindung nach einem der Ansprüche 1 bis 3, dadurch gekennzeichnet , daß die radiale Breite der beiden halbkreisförmigen Vertiefungen (9a, 10a) verschieden groß ist.

5. Einzelstabverbindung nach einem der Ansprüche 1 bis 4, dadurch g e k e n n z e i c h n e t , daß die beiden halbkreisförmigen Vertiefungen (9a, 10a) trapezförmige Querschnitte aufweisen.

6. Einzelstabverbindung nach einem der Ansprüche 1 bis 5, dadurch g e k e n n z e i c h n e t , daß der Kupplungsabschnitt (1a) an seinem dem Endabschnitt (3a) abgewandten Ende einen halbkreisförmigen Umriß (15a) aufweist.

7. Einzelstabverbindung nach Anspruch 6, dadurch g e - k e n n z e i c h n e t , daß der halbkreisförmige Umriß (15a) den Außenrand der die obere Ringfläche (9a) begrenzenden äußeren Wandung (16) bildet, deren Dicke (E) in radialer Richtung gleich der radialen Breite (F) des Bodens (17a) der unteren Ringfläche (10a) ist.

8. Einzelstabverbindung nach einem der Ansprüche 1 bis 7, dadurch g e k e n n z e i c h n e t , daß die Seitenflächen (18a) des gegabelten Endabschnitts (3a) tangential in den halbkreisförmigen Umriß (15a) des Kupplungsabschnitts (1a) übergehen.

9. Einzelstabverbindung nach einem der Ansprüche 1 bis 8, dadurch g e k e n n z e i c h n e t , daß die axiale Höhe (C) zweier ineinandergreifender Kupplungsabschnitte (1a) kleiner ist als die zweifache Dicke (D) ihrer Endabschnitte (3a).

10. Einzelstabverbindung für die Längsgurte von gitterartigen Segmenten für Tunnelausbaurahmen, welche einen Kupplungsabschnitt und einen quer zur Stablängsrichtung schalenförmig ausgebildeten Endabschnitt aufweist, auf den das stabförmige Gurtende aufgeschweißt ist, wobei die Kupplungsabschnitte miteinander in kraftübertragenden Eingriff bringbar sind und die so miteinander verbundenen Kupplungsabschnitte durch wenigstens einen gemeinsamen Schraubenbolzen zusammenhaltbar sind, dadurch g e - k e n n z e i c h n e t , daß der schalenförmige Endabschnitt (2b) gegabelt ist und zwei parallele Schenkel (3b, 4b) aufweist, und daß das stabförmige Gurtende (5b) zwischen diese Schenkel (3b, 4b) eingeschweißt ist, wobei die Schweißnähte (6b, 7b; 8b, 9b) beidseitig des Endabschnitts (2b) paarweise gegenüberliegen.

11. Einzelstabverbindung nach Anspruch 10, dadurch g e k e n n z e i c h n e t , daß der Durchmesser des stabförmigen Gurtendes (5b) wenigstens im Bereich der parallelen Schenkel (3b, 4b) deren Dicke entspricht, so daß die Oberfläche (12b) des eingeschweißten Gurtstabendes (5b) nicht über die Oberseite (10b) und die Unterseite (11b) der Schenkel hinausragt.

12. Einzelstabverbindung nach Anspruch 10, dadurch g e k e n n z e i c h n e t , daß der Durchmesser des Endes des Gurtstabes (5b) wenigstens im Bereich der parallelen Schenkel (3b, 4b) etwa doppelt so groß ist wie die Dicke jedes Schenkels, gemessen als Abstand zwischen den flachen Ober- und Unterseiten (10b, 11b) der Schenkel.

13. Einzelstabverbindung nach Anspruch 12, dadurch g e k e n n z e i c h n e t , daß wenigstens das Ende des Gurtstabes (5b) im Bereich der parallelen Schenkel (3b, 4b) einen runden Querschnitt aufweist.

14. Einzelstabverbindung nach Anspruch 13, dadurch g e k e n n z e i c h n e t , daß der Querschnittsmittelpunkt des Gurtstabendes in derselben Ebene liegt wie die Oberseiten (10b) der parallelen Schenkel (3b, 4b).

15. Einzelstabverbindung nach einem der Ansprüche 10 bis 14, dadurch g e k e n n z e i c h n e t , daß die beiden Schweißnähte (6b, 7b) im Bereich des konkav gewölbten Teils der Oberseite (10b) der parallelen Schenkel (3b, 4b) ihrer Dicke und Länge nach den beiden Schweißnähten (8b, 9b) auf dem konkav gewölbten Teil der Unterseite (11b) der parallelen Schenkel (3b, 4b) entsprechen.

16. Einzelstabverbindung nach einem der Ansprüche 10 bis 15, dadurch g e k e n n z e i c h n e t , daß die parallelen Ränder (14b, 15b, 16b, 17b) der beiden Schenkel (3b, 4b), die dem stabförmigen Gurtende (5b) zugewandt sind, abgefast sind.

17. Einzelstabverbindung nach Anspruch 16, dadurch g e - k e n n z e i c h n e t , daß die Abfasungen (18b, 19b) auf der Oberseite des Endabschnitts (2b) mit den flachen Teilen der Oberseite (10b) der parallelen Schenkel (3b, 4b) einen Winkel von 40° einschließen.

18. Einzelstabverbindung nach den Ansprüchen 16 und 17, dadurch g e k e n n z e i c h n e t , daß die Abfasungen (20b, 21b) auf der Unterseite des Endabschnitts (2b) mit dem flachen Teil der Unterseite (11b) der parallelen Schenkel (3b, 4b) einen Winkel von 45° einschließen.

19. Einzelstabverbindung nach einem der Ansprüche 10 bis 18, dadurch g e k e n n z e i c h n e t , daß der schalenförmige Endabschnitt (2b) am Übergang der parallelen Schenkel (3b, 4b) zum Kupplungsabschnitt (1b) eine abgeschrägte Stirnfläche (22b) aufweist, die mit der Stirnfläche (23b) des stabförmigen Gurtendes (5b) einen Raum umschließt, der mit einer Schweißnaht (24b) gefüllt ist.

20. Einzelstabverbindung für die Längsgurte von gitterartigen Segmenten für Tunnelausbaurahmen, bei der das Gurtende einen mit einem Haken versehenen Kupplungsabschnitt aufweist, sowie einen mit zwei Schenkeln versehenen Endabschnitt, der mit dem Kupplungsabschnitt fest verbunden ist, welcher mit dem Kupplungsabschnitt des mit diesem Haken in formschlüssigen Eingriff bringbaren Gegenhakens durch einen gemeinsamen Schraubenbolzen zusammenhaltbar ist, dadurch g e k e n n z e i c h n e t , daß der Kupplungsabschnitt des Gegenhakens (6c) ein separater, mit dem Endabschnitt (3c) unverbundener, plattenförmiger Körper ist, und die beiden Schenkel (3ac, 3bc) des Endabschnitts (3c) an ihrem vorderen Ende ein sie verbindendes Bogenstück (9c) bilden, das in den Haken (5c) und Gegenhaken (6c) einlegbar und durch den Schraubenbolzen (8c) festspannbar ist.

21. Einzelstabverbindung nach Anspruch 20, dadurch g e k e n n z e i c h n e t , daß der Haken (5c) und der Gegenhaken (6c) auf ihren im Kupplungszustand einander gegenüberliegenden Oberflächen (12c, 13c) Vertiefungen (14c, 15c) zur Aufnahme des Bogenstücks (9c) und eines Teils der beiden Schenkel (3ac, 3bc) aufweisen, die nach Größe und Form an die Konfiguration des Bogenstücks (9c) und der beiden Schenkel (3ac, 3bc) angepaßt sind.

22. Einzelstabverbindung nach Anspruch 20 oder 21, dadurch g e k e n n z e i c h n e t , daß die im Kupplungszustand einander gegenüberliegenden Oberflächen (12c, 13c) des Hakens (5c) und Gegenhakens (6c) im Bereich der Durchführungsbohrungen (7c, 16c) des Schraubenbolzens (8c) eben sind und in zwei in geringem Abstand parallel verlaufenden Ebenen liegen, zwischen denen sich die fluchtend aufeinander ausgerichteten Längsachsen (19ac, 19bc) der Kupplungsabschnitte bzw.der Gurtenden (4c) erstrecken, und daß die Meridianebene des Bogenstücks (9c) von Haken (5c) und Gegenhaken (6c) zwischen den Oberflächen (12c, 13c) liegt.

23.   Einzelstabverbindung nach einem der Ansprüche 20 bis 22, dadurch g e k e n n z e i c h n e t , daß der Haken (5c) in seinem rückwärtigen, den Kupplungsabschnitt (2c) zugewandten Bereich eine nutförmige Aussparung (18c) mit einem vorspringenden, hakenartigen Randkörper (17c) aufweist, in die ein flanschförmiger Umfangsrandkörper (11c) des Gegenhakens (6c) im Kupplungszustand eingreift.

24.   Einzelstabverbindung nach einem der Ansprüche 20 bis 23, dadurch g e k e n n z e i c h n e t , daß das Bogenstück (9c) im Kupplungszustand in einer Ebene senkrecht zur Richtung des Schraubenbolzens (8c) angeordnet ist.

25.   Einzelstabverbindung für die Längsgurte von gitterartigen Segmenten für Tunnelausbaurahmen, welche einen mit einer Klaue versehenen Kupplungsabschnitt und einen Endabschnitt aufweist, auf den das Gurtende aufschweißbar ist, wobei die Klaue in ihrer Oberfläche mit Vertiefungen und Vorsprüngen versehen ist, die mit entsprechenden Vorsprüngen und Vertiefungen der Klaue des zu verbindenden Stabes in formschlüssigen Eingriff bringbar sind, dadurch g e k e n n z e i c h n e t , daß die Vorsprünge und Vertiefungen jeder Klaue (2d) eine Schrägverzahnung (3d) bilden, die in einer Ebene (C-C) liegt, welche zur Längsachse (4d) der Kupplungsabschnitte (1d) bzw. Längsgurte (5d) geneigt ist, und daß die durch ihre Schrägverzahnungen (3d, 3d) miteinander in Eingriff stehenden Klauen (2d, 2d) von einer sie kraftschlüssig umgebenden, rohrförmigen Hülse (7d) zusammengehalten werden, deren innerer Querschnitt ursprünglich kleiner ist als der größte gemeinsame Querschnitt der beiden Klauen (2d, 2d).

26.   Einzelstabverbindung nach Anspruch 25, dadurch g e k e n n z e i c h n e t , daß die miteinander in Eingriff stehenden Klauen (2d, 2d) einen elliptischen Querschnitt bilden.

27. Einzelstabverbindung nach Anspruch 26, dadurch g e k e n n z e i c h n e t , daß die große Achse (A) des elliptischen Querschnitts (6c) quer zur Längsachse (4d) der Kupplungsabschnitte (1d) bzw. Längsgurte (5d) verläuft.

28. Einzelstabverbindung nach einem der Ansprüche 25 bis 27, dadurch g e k e n n z e i c h n e t , daß die Schrägverzahnungen (3d, 3d) geradlinig sind und sich quer zur Längsachse (4d) der Kupplungsabschnitte (1d, 1d) bzw. Längsgurte (5d, 5d) erstrecken.

29. Einzelstabverbindung nach Anspruch 28, dadurch g e k e n n z e i c h n e t , daß sich die Schrägverzahnungen (3d, 3d) rechtwinklig zur Längsachse (4d) der Kupplungsabschnitte (1d, 1d) bzw. Längsgurte (5d, 5d) erstrecken.

30. Einzelstabverbindung nach Anspruch 25, dadurch g e k e n n z e i c h n e t , daß die Schrägverzahnungen (3d, 3d) sich bogenförmig erstrecken.

31. Einzelstabverbindung nach einem der Ansprüche 25 bis 30, dadurch g e k e n n z e i c h n e t , daß die Schrägverzahnungen (3d) ein sägezahnförmiges Profil aufweisen.

32. Einzelstabverbindung nach einem der Ansprüche 25 bis 31, dadurch g e k e n n z e i c h n e t , daß der Neigungswinkel ($\alpha$) der Schrägverzahnungen (3d) zur Längsachse (4d) zwischen 1 und 45° beträgt.

33. Einzelstabverbindung nach einem der Ansprüche 25 bis 32, dadurch g e k e n n z e i c h n e t , daß das

Achsenverhältnis des elliptischen Querschnitts (6d) zweier durch die Schrägverzahnungen (3d, 3d) verbundener Klauen (2d, 2d) zwischen 1 : 0,99 und 1 : 0,5 beträgt.

34. Einzelstabverbindung nach einem der Ansprüche 25 bis 32, dadurch g e k e n n z e i c h n e t , daß die rohrförmige Hülse (7d) einen kreisrunden Querschnitt mit einem Durchmesser aufweist, der kleiner ist als die große Achse (A) und größer ist als die kleine Achse (B) des elliptischen Querschnitts (6d) der beiden miteinander in Eingriff stehenden Klauen (2d, 2d).

35. Einzelstabverbindung nach einem der Ansprüche 25 bis 32, dadurch g e k e n n z e i c h n e t , daß die rohrförmige Hülse (7d) einen elliptischen Querschnitt aufweist, bei dem eine der Achsen kleiner ist als entweder die große Achse (A) des elliptischen Querschnitts (6d) oder die kleine Achse (B) des elliptischen Querschnitts (6d) der miteinander in Eingriff stehenden Klauen (2d, 2d).

36. Einzelstabverbindung für die Längsgurte von gitterartigen Segmenten für Tunnelausbaurahmen, welche einen mit einer Klaue versehenen Kupplungsabschnitt und einen Endabschnitt aufweist, auf den das Gurtende aufschweißbar ist, wobei die Klaue in ihre Oberfläche mit Vertiefungen und Vorsprüngen versehen ist, die mit entsprechenden Vorsprüngen und Vertiefungen der Klaue des zu verbindenden Stabes in formschlüssigen Eingriff bringbar sind, dadurch g e k e n n z e i c h n e t , daß die Vorsprünge und Vertiefungen jeder Klaue (2e, 2e) eine Schrägverzahnung (3e, 3e) bilden, die in einer Ebene (A-A) liegt, welche zur Längsachse (4e) der Kupplungsabschnitte (1e) bzw. Längsgurte (5e) geneigt ist, und daß die durch ihre Schrägverzahnung miteinander in Eingriff stehenden Klauen (2e, 2e) auf ihrer äußeren Oberfläche (16e) mit einem Gewinde (7e) versehen sind, auf das zur gegenseitigen Verspannung der Klauen wenigstens eine Mutter (6e) aufschraubbar ist.

37. Einzelstabverbindung nach Anspruch 36, dadurch g e k e n n z e i c h n e t , daß das Gewinde (7e) ein konisches Grobgewinde ist, auf das zwei Muttern (6e) aufschraubbar sind, bei denen die eine einer der beiden Klauen (2e, 2e) zugeordnet ist.

38. Einzelstabverbindung nach Anspruch 36, dadurch g e k e n n z e i c h n e t , daß das Gewinde ein gerades Gewinde ist und die beiden in Eingriff stehenden Klauen durch eine einzige,über das gerade Gewinde geschraubte Mutter zusammengepreßt werden.

0162436

Fig.1

Fig.2

0162436

## Fig.4

## Fig.3

Fig.5

Fig.6

Fig.7

Fig.8

Fig.9

0162436

Fig.10 · Fig.11 · Fig.12 · Fig.13 · Fig.14

Fig.15

Fig.16

Fig.17

Fig.18

Fig.19

8d · 9d · 1d · 2d · 7d · 3d · 11d · 15d · 12d · 1d · 5d

5d · 10d · 13d · 3d · 14d · 2d · 8d

XIX · XVIII · XVII

D · 9d · 2d · 12d

4d · C · 10d · 3d · 11d · α · C

D · XIX · XVIII · XVII

6d · B · A · 5/8

6d

9d · 8d · 5d

0162436

Fig.20

Fig.22

Fig.21

0162436

Fig.23